# EUROPEAN PATENT APPLICATION

(11) **EP 3 741 591 A1**
(43) Date of publication of application: **25.11.2020**
(21) Application number: 20175400.9
(22) Date of filing: 19.05.2020
(51) Int. Cl.: B60C 25/05, B60C 25/138

(54) **TYRE-CHANGING MACHINE, PARTICULARLY FOR LARGE WHEELS**

(30) Priority: 20.05.2019 IT 201900007034
(71) Applicant: Devel S.r.l., 41042 Fiorano Modenese (MO) (IT)
(72) Inventor: Bonetti, Valentino, 41042 Fiorano Modenese (MO) (IT)
(74) Representative: Brunacci, Marco

(57) **Abstract**

The tyre-changing machine (1) comprises:
- a supporting frame (13) resting on the ground;
- gripping and setting in rotation means (16) adapted to grip at least one wheel (4), provided with at least one rim (3) and with at least one tyre (2);
- movement means (23) of the gripping and setting in rotation means (16);
- at least one first bead-breaking assembly (27) and at least one second bead-breaking assembly (28) adapted to simultaneously grip the tyre (2) in a delivery configuration;
- sliding means (34) adapted to make the first bead-breaking assembly (27) and the second bead-breaking assembly (28) slide.

## Description

The present invention relates to a tyre-changing machine, particularly for large wheels.

Vehicle wheels comprise a metal rim, commonly known as a wheel rim, on which a tyre is mounted in a removable manner.

The rim has a substantially cylindrical shape and is provided with annular flanges at the ends, commonly known as flanges, on which the beads with which the tyre is provided are interlocked.

In particular, the rim comprises a first flange and a second flange which, during the use of the tyre-changing machine, are respectively directed towards the tyre-changing machine itself and outwards, i.e. on the opposite side of the machine.

Similarly, the tyre comprises a first bead and a second bead associated with the first flange and with the second flange, respectively.

The tyre-changing machines allow the tyre to be removed from the rim to carry out, for example, maintenance or replacement jobs of the wheel components and, subsequently, to mount the same tyre again, or a replacing one, onto the rim.

The tyre-changing machines of known type comprise a supporting frame to the ground supporting means for gripping and setting the wheel in rotation, which allow both to hold the rim on the machine, preventing it from falling to the ground during tyre removal operations, and to set the wheel in rotation with respect to the supporting frame to promote the tyre removal operation.

In particular, the tyre-changing machines used to work on large wheels (e.g. wheels for trucks, wheels for agricultural machinery, wheels for earthmoving machinery) comprise means for gripping and setting the wheel in rotation which are movable with respect to the supporting frame along a substantially vertical direction.

Large wheels are difficult to handle manually by an operator and lifting them manually off the ground to place them on the tyre-changing machine may be difficult.

Thanks to the motility of the gripping and setting in rotation means, the tyre can be hooked and lifted with respect to the ground, after that it has been moved close to the tyre-changing machine by rolling on the ground.

At the same time, the large wheels are set in rotation around a substantially horizontal axis.

In order to allow the tyre to be removed from the rim, the bead-breaking of the tyre is initially carried out using suitable bead-breaking tools with which the tyre-changing machines are provided and which are associated with the supporting frame.

Specifically, the bead-breaking tools are forcefully fitted between the rim and the tyre in order to promote bead detachment from the flanges.

Subsequently, the wheel is set in rotation and, thanks to another working tool with which the tyre-changing machine is provided, the tyre is removed from the rim.

A particular type of tyre-changing machines used to work on large wheels is shown for example in patent document EP 1623850 and comprises a bead-breaking tool capable of removing both the first and the second bead.

The above mentioned tyre-changing machine also comprises a hook-shaped tool that is fitted between the second removed bead and the second flange and, as a result of setting the tyre in rotation, promotes the complete overriding of the second flange by the second bead.

By pushing the tyre along the wheel axle, the first bead can also ride over the second flange, completely separating the tyre from the rim.

The above mentioned tyre-changing machine does however have some drawbacks.

First, the detachment of the tyre from the rim even when the first bead rides over the second flange often takes place in a way that does not promote the subsequent grip and movement of the tyre by an operator.

In particular, once both beads have been taken out of the rim, the tyre can remain fastened to the hook-shaped tool, thus requiring the intervention of an operator who has to unhook it manually and place it on the ground.

The aforementioned operation requires considerable physical effort on the part of the operator, who has to lift the tyre and hold it as it descends to the ground.

In the event of the tyre not hanging from the hook-shaped tool, it falls to the ground, possibly causing damage to people and/or property, and often positions horizontally, i.e. in a position that makes it difficult for the operator to handle it. Secondly, the above mentioned tyre-changing machines are controlled in a purely manual way, i.e. the machine components are controlled by the operator through a control panel.

Once again, after that the second bead has been removed, the tyre is no longer fully held by the rim and therefore tends to sag out and partially fall down, hindering and partially slowing down the subsequent machining operations.

A second type of tyre-changing machine for large wheels comprises a first bead-breaking tool and a second bead-breaking tool, which are positioned at the first bead and at the second bead respectively.

In this case the bead-breaking tools can be used both to un-bead the tyre and to remove it from the rim.

After that the beads have been removed, in fact, the first bead-breaking tool and the second bead-breaking tool are operated in such a way as to simultaneously apply two opposite forces in the proximity of the beads but in diametrically opposite wheel positions, so as to incline the tyre and force the second bead to ride over the second flange.

By continuing to push the tyre along the wheel axle, the first bead may also ride over the second flange.

The second type of tyre-changing machines does, however, also have some drawbacks, which are partially due to the limitations suffered by the tyre-changing machines manufactured according to the teachings of patent document EP 1623850.

In fact, the detachment of the tyre by the tyre-changing machines comprising two bead-breaking tools often takes place in ways that do not promote the subsequent gripping and movement of the tyre by an operator.

The tyre, after being separated from the rim, falls immediately and suddenly to the ground, often positioning horizontally and risking to damage persons and/or property that may be present.

Also in this case, the control of the machine is mainly manual, through the use of a control panel by an operator.

The main aim of the present invention is to devise a tyre-changing machine, particularly for large wheels, which allows improving the way the tyre is detached, so as to promote the grip and subsequent handling of the tyre by an operator.

As part of the above mentioned aim, the present invention is intended to reduce any damage caused by the tyre to the components of the tyre-changing machine and to the operators in the working area of the tyre-changing machine itself.

Another object of the present invention is to devise a tyre-changing machine that can be controlled at least partially in an automated manner.

Another object of the present invention is to devise a tyre-changing machine that allows overcoming the above mentioned drawbacks of the prior art within a simple, rational, easy, effective to use and affordable solution.

The objects set out above are achieved by the present tyre-changing machine, in particular for large wheels, having the characteristics of claim 1.

Other characteristics and advantages of the present invention will be more evident from the description of a preferred, but not exclusive, embodiment of a tyre-changing machine, in particular for large wheels, illustrated by way of an indicative, yet non-limiting example, in the attached tables of drawings in which:

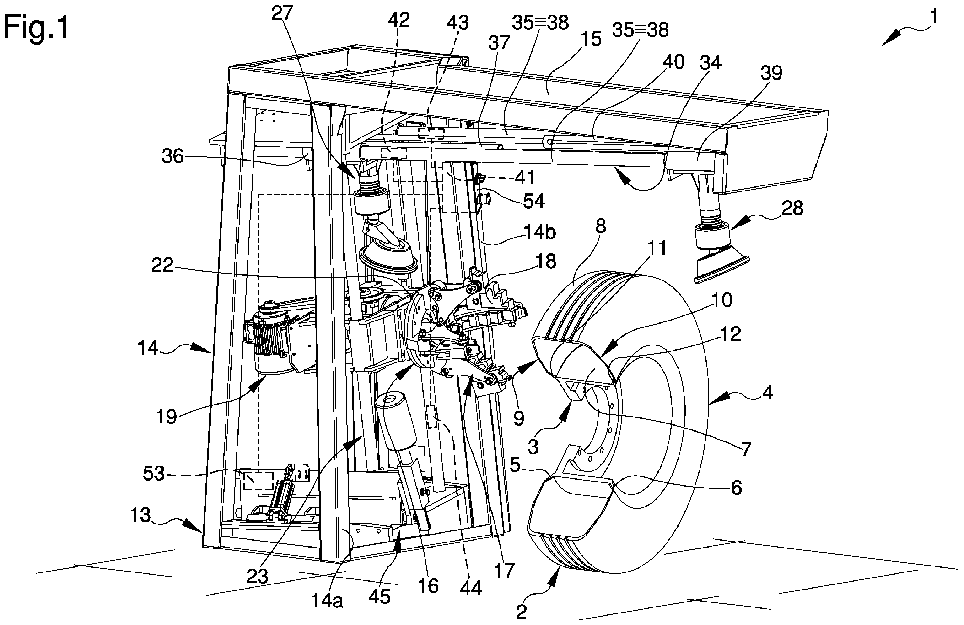

Figure 1 is an axonometric view of the tyre-changing machine according to the invention and of the wheel partially in section;

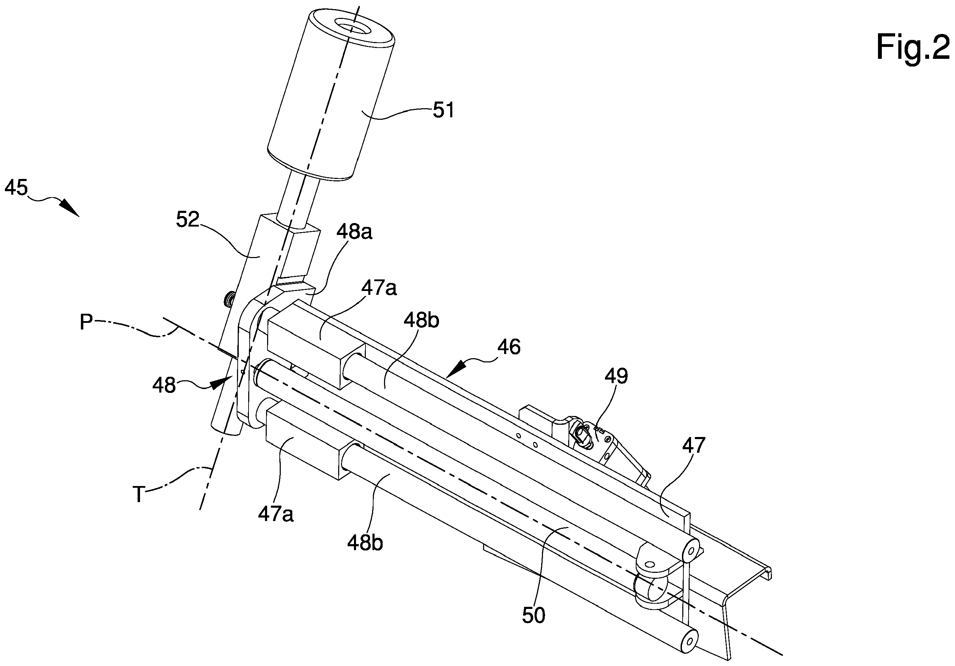

Figure 2 is an axonometric view of a detail of the tyre-changing machine according to the invention;
Figure 3 is a side view of the tyre-changing machine according to the invention during a machining phase and of the wheel partially in section;
Figure 4 is a side view of the tyre-changing machine according to the invention during another machining phase and of the wheel partially in section;
Figure 5 is a front view of the tyre-changing machine in Figure 4;
Figure 6 is a side view of the tyre-changing machine according to the invention with the tyre in the delivery configuration and partially in section;
Figure 7 is a side view of the machine according to the invention with the tyre partially in section and away from the rim.

With particular reference to these figures, reference numeral 1 globally indicates a tyre-changing machine, particularly for large wheels, which can be used to remove and fit a tyre 2 from and on the rim 3 of a wheel 4.

The rim 3 is made of metal material, has a substantially cylindrical shape and comprises at the ends a first flange member 5 and a second flange member 6, which are substantially annular flanges on which the tyre 2 abuts.

Between the first flange member 5 and the second flange member 6, the channel 7 of the rim 3 is defined, i.e. the inner portion of the rim 3 which is not visible from the outside when the tyre 2 is fitted on the rim 3.

When using the tyre-changing machine 1, the first flange member 5 and the second flange member 6 face the tyre-changing machine 1 and outwards, respectively, i.e. opposite the tyre-changing machine 1.

The tyre 2 has a substantially ring-shaped design and comprises a tread 8, which contacts the ground when using the wheel 4.

In addition, the tyre 2 comprises a first flank 9 and a second flank 10, which extend in a substantially transverse manner to the tread 8.

The first flank 9 and the second flank 10 are provided with a first bead 11 and with a second bead 12, respectively, located on the opposite side with respect to the tread 8.

When mounted on the rim 3, the first bead 11 and the second bead 12 can be juxtaposed to the first flange member 5 and to the second flange member 6, respectively.

Within the present treatise the term "mounted", when referring to the first bead 11 and/or to the second bead 12, is used to indicate the condition in which the first bead 11 and/or the second bead 12 are located between the first flange member 5 and the second flange member 6, i.e. arranged inside the channel 7.

Likewise, the term "removed" relates to the condition wherein the first bead 11 and/or the second bead 12 are located in a space not comprised between the first flange member 5 and the second flange member 6.

Furthermore, as will be better explained below, the terms "substantially horizontal" and "substantially vertical" mean, respectively, a direction which is comprised within the range ± 40° with respect to the horizontal plane and a direction which is comprised within the range ± 40° with respect to the vertical plane.

The tyre-changing machine 1 comprises at least one supporting frame 13 resting on the ground comprising at least one post member 14 and at least one cross member 15 associated with the upper end of the post member 14.

The supporting frame 13, e.g., comprises holding bars made of metal material mutually associated to form a reticular structure resting on the ground and retaining walls (not shown in the figures) associated with the holding bars.

Specifically, the post member 14 comprises holding bars having a substantially vertical extension and, below, it is provided with a bedplate directly in contact with the ground.

The post member 14 comprises a first portion 14a and a second portion 14b, mutually flanked and both extending from the bedplate towards the top of the post member 14.

When using the tyre-changing machine 1, the wheel 4 is positioned in the proximity of the first portion 14a while the operator, on the other hand, moves in the proximity of the second portion 14b.

The cross member 15 comprises holding bars having a substantially horizontal extension which extend in a cantilevered fashion from the post member 14 outwards.

Alternative embodiments cannot however be ruled out wherein the post member 14 and the cross member 15 have different conformation; for example, embodiments are provided wherein there are two post members 14 located at both ends of the cross member 15, respectively, to form a bridge structure.

Preferably, the cross member 15 protrudes from the first portion 14a; this way there are no objects protruding from the second portion 14b that may interfere with the operator's activities.

The tyre-changing machine 1 comprises gripping and setting in rotation means 16 associated with the supporting frame 13, adapted to grip the wheel 4 and to move the rim 3 in rotation around a substantially horizontal axis of rotation R.

As previously mentioned, the term "substantially horizontal" is intended to indicate a direction that is comprised within the range ± 40° with respect to the horizontal plane.

This means that the axis of rotation R is inclined by a first angle α with respect to the horizontal plane, wherein the first angle α can vary from -40° (condition wherein the axis of rotation R extends from the post member 14 downwards) to +40° (condition wherein the axis of rotation R extends from the post member 14 upwards), passing e.g. through 0° (condition wherein the axis of rotation R is perfectly horizontal).

Preferably, the first angle α has an amplitude ranging from 0° to 35°, or from 1 to 10°, or from 3° to 7°, and even better equal to 5°.

The advantageous use of a first angle α greater than zero means that the wheel 4 is partially inclined towards the tyre-changing machine 1, when mounted on the gripping and setting in rotation means 16, thus limiting the occurrence of unpleasant accidents caused by the accidental fall of the wheel 4 due to its possible detachment from the gripping and setting in rotation means 16.

The gripping and setting in rotation means 16 comprises:
- at least one gripping unit 17 comprising a plurality of jaws 18, preferably of the self-centering type, adapted to grip the rim 3;
- at least one driving unit 19 for the setting in rotation of the gripping unit 17 around the axis of rotation R, comprising:
   - at least one electric motor 20;
   - at least one transmission shaft 21 which extends along the axis of rotation R, associated with the electric motor 20 and on which the gripping unit 17 is mounted.

The gripping and setting in rotation means 16 are located at the first portion 14a.

The gripping unit 17 comprises a disc-shaped member 22 mounted centrally on the transmission shaft 21.

The jaws 18 are mounted on the edge of the disc-shaped member 22 in a substantially radial manner.

In the particular embodiment shown in the figures there are four jaws 18 arranged angularly at regular distance, i.e. staggered by 90°.

Alternative embodiments cannot however be ruled out wherein the jaws 18 are present in a different number; for example, there may be two jaws 18 located in diametrically opposite positions or three jaws 18 staggered by 120°, or six jaws 18 staggered by 60°.

Each jaw 18 is rotatable with respect to the disc-shaped member 22 around an axis substantially orthogonal to the axis of rotation R, so as to grip the rim 3.

The tyre-changing machine 1 comprises movement means 23, associated with the supporting frame 13 and adapted to move the gripping and setting in rotation means 16 along a substantially vertical direction of lifting/lowering L.

The movement means 23 are located at the point where the first portion 14a is located.

As previously mentioned, the term "substantially vertical" indicates a direction that is comprised in the range ± 40° with respect to the vertical plane.

This means that the direction of lifting/lowering L is inclined by a second angle β with respect to the vertical plane, wherein the second angle β may vary between -40° (condition wherein the direction of lifting/lowering L extends from the bedplate of the post member 14 upwards, moving away from the second portion 14b), and +40° (condition wherein the direction of lifting/lowering L extends from the bedplate of the post member 14 upwards, approaching the second portion 14b), passing e.g. through 0° (condition wherein the direction of lifting/lowering L is perfectly vertical).

Preferably, the second angle β has a width ranging from 0° to -20°, or from -15° to -5°, or from -12° to -8°, and even better equal to -10°.

This way, as can be clearly seen from the figures, a useful working space is created for the operator, who can easily access the wheel 4 when using the tyre-changing machine 1.

The movement means 23 usefully comprise at least one sliding rail 24 associated with the post member 14 and having a substantially vertical extension.

In the particular embodiment shown in the figures, the sliding rail 24 comprises two tubular members extending between the top and the bedplate of the post member 14.

The gripping and setting in rotation means 16 comprise at least one sliding member 25 which is engaged on the sliding rail 24 in a sliding manner along the direction of lifting/lowering L.

The driving unit 19, which with the gripping and setting in rotation means 16 are provided, is mounted onto the sliding member 25.

Specifically, the sliding member 25 is substantially a slide, sliding along the tubular members.

The movement means 23 comprise at least one actuator device 26 associated with the supporting frame 13 and with the sliding member 25 for the movement of the sliding member 25 on the sliding rail 24.

In the particular embodiment shown in the figures, there are two actuator devices 26 mounted at the upper end of the post member 14.

Each actuator device 26 is a hydraulic cylinder provided with a stem extending along a substantially vertical direction.

Alternative embodiments cannot however be ruled out wherein there is a different number of actuator devices 26, e.g. only one actuator device 26 may be located centrally with respect to the sliding member 25.

Furthermore, the actuator devices 26 can be of different types, e.g. pneumatic cylinders.

The tyre-changing machine 1 comprises at least one first bead-breaking assembly 27 and at least a second bead-breaking assembly 28 associated below the cross member 15 and adapted to remove the first bead 11 and the second bead 12 when both beads 11, 12 are mounted on the rim 3 and to grip simultaneously the tyre 2 in a delivery configuration, wherein the tyre 2 is kept suspended below the cross member 15, when at least the second bead 12 is removed from the rim 3.

The first bead-breaking assembly 27 and the second bead-breaking assembly 28 comprise a first arm 29 and a second arm 30 respectively, both associated with one end below the cross member 15 and protruding downwards.

The first bead-breaking assembly 27 and the second bead-breaking assembly 28 comprise a first bead-breaking device 31 and a second bead-breaking device 32 respectively, associated with the free end of the first arm 29 and of the second arm 30.

The bead-breaking devices 31, 32 have a substantially truncated-cone shape and comprise, at one side opposite the arms 29, 30 a protruding portion 33 having a substantially annular shape.

During the use of the tyre-changing machine 1, as will be better described below, the first bead-breaking device 31 is forcefully fitted between the first bead 11 and the first flange member 5, while the second bead-breaking device 32 is forcefully fitted between the second bead 12 and the second flange member 6, thus promoting the detachment of the beads 11, 12 themselves.

The tyre-changing machine 1 comprises sliding means 34 associated with the supporting frame 13 and adapted to make the first bead-breaking assembly 27 and the second bead-breaking assembly 28 slide with respect to the cross member 15 along a sliding direction S substantially parallel to the axis of rotation R.

This way it is possible to locate the first bead-breaking assembly 27 and the second bead-breaking assembly 28 in a useful position to work on the beads 11, 12 and to be able to grasp at the same time the tyre 2 in the delivery configuration, as will be explained later.

Conveniently, the sliding means 34 comprise:
- at least one first rail unit 35, which is associated with the cross member 15 and extends along the sliding direction S, the first bead-breaking assembly 27 comprising at least one first slide 36 sliding along the first rail unit 35;
- at least one first actuator member 37 associated with the supporting frame 13 and with the first slide 36 to move the first slide 36 with respect to the first rail unit 35;
- at least one second rail unit 38, which is associated with the cross member 15 and extends along the sliding direction S, the second bead-breaking assembly 28 comprising at least one second slide 39 sliding along the second rail unit 38;
- at least one second actuator member 40 associated with the supporting frame 13 and with the second slide 39 to move the second slide 39 with respect to the second rail unit 38.

In the particular embodiment shown in the figures, the first rail unit 35 comprises two bar members.

The second rail unit 38 conveniently coincides with the first rail unit 35 and, in actual facts, both the slides 36, 39 slide on the same rail unit.

Alternative embodiments cannot however be ruled out wherein the first rail unit 35 and the second rail unit 38 have a different conformation.

The first rail unit 35 may, e.g., comprise a different number of bars on which the first slide 36 slides.

Again, the second rail unit 38 can be independent of the first rail unit 35, comprising, for example, bar members on which only the second slide 39 slides. The first arm 29 is fixed to the first slide 36 and the second arm 30 is fixed to the second slide 39.

The first actuator member 37 and the second actuator member 40 are hydraulic cylinders that allow the first slide 36 and the second slide 39 to move along the sliding direction S, thus allowing the first bead-breaking assembly 27 and the second bead-breaking assembly 28 to slide with respect to the cross member 15.

The tyre-changing machine 1 advantageously comprises at least one management and control unit 41 operationally connected to the sliding means 34 and configured to make the first bead-breaking assembly 27 and the second bead-breaking assembly 28 slide simultaneously in the delivery configuration to move the tyre 2 away from the rim 3.

The management and control unit 41, in the particular embodiment shown in the figures, is associated with the post member 14 at the second portion 14b and is substantially an electronic processor that manages the operation of the tyre-changing machine 1.

The management and control unit 41 controls, in particular, the operation of the sliding means 34.

The tyre 2, as mentioned above, is in the delivery configuration when at least the second bead 12 is removed, i.e. it has ridden over the second flange member 6.

When the second bead 12 is removed and the first bead 11 is still on, the tyre 2 is no longer permanently associated with the rim 3 and may sag out at the point where the second flange member 6 is located.

Therefore, the sliding means 34 move the second bead-breaking assembly 28 so that it abuts on the second flank 10 and holds the tyre 2.

The delivery configuration also indicates the condition wherein both the beads 11, 12 are removed and the tyre 2 is moved away from the rim 3.

In this case the first bead-breaking assembly 27 and the second bead-breaking assembly 28 have to be brought closer together to abut on the first flank 9 and on the second flank 10 respectively, and grip the tyre 2, then they have to slide simultaneously in the direction of moving away from the post member 14 so as to drag the tyre 2 away from the rim 3 and, at the same time, prevent it from falling to the ground.

It is easy to understand how important it is to control in a precise and targeted manner the movement of the first bead-breaking assembly 27 and of the second bead-breaking assembly 28.

Specifically, the management and control unit 41 controls the operation of the first actuator member 37 and of the second actuator member 40, thus modifying the sliding level of the first slide 36 and of the second slide 39 with respect to the cross member 15.

Advantageously, the tyre-changing machine 1 comprises position detection means 42, 43, 44 associated with the supporting frame 13, connected to the management and control unit 41 and adapted to detect the position of the gripping and setting in rotation means 16, of the first bead-breaking assembly 27 and of the second bead-breaking assembly 28 with respect to the supporting frame 13.

The position detection means 42, 43, 44 comprise first linear transducers 42, located in the proximity of the first rail unit 35, and second linear transducers 43, located in the proximity of the second rail unit 38.

The first linear transducers 42 detect the distance of the first slide 36 from the post member 14 and the second linear transducers 43 detect the distance of the second slide 39 from the post member 14.

The first linear transducers 42 and the second linear transducers 43 communicate these data to the management and control unit 41.

This way, the management and control unit 41 can control, in a targeted manner, the operation of the first actuator member 37 and of the second actuator member 40, thus locating the first bead-breaking assembly 27 and the second bead-breaking assembly 28 in a suitable position to ensure the correct operation of the tyre-changing machine 1.

The management and control unit 41 also controls the operation of the movement means 23 and, specifically, controls the operation of the actuator device 26.

In this respect, the position detection means 42, 43, 44 comprise third linear transducers 44 located in the proximity of the sliding rail 24 which detect the height of the sliding member 25 and communicate this data to the management and control unit 41.

The management and control unit 41 controls, if necessary, the actuator device 26, thus modifying the height of the sliding member 25.

Conveniently, the tyre-changing machine 1 comprises:
- at least one thrust assembly 45 associated with the lower end of the post member 14;
- at least one movement assembly 46 associated with the supporting frame 13 and adapted to move the thrust assembly 45 between at least:
   - a resting configuration in which it is moved away from the tyre 2; and
   - a thrust configuration in which it is abutted at least partially on the second flank 10 and is adapted to exert a thrust on the tyre 2 along a thrust direction P substantially parallel to the sliding direction S, at the same time as a thrust exerted by the first bead-breaking assembly 27 on the first flank 9.

The movement assembly 46 conveniently comprises:
- at least one holding member 47 hinged to the supporting frame 13 around an axis substantially parallel to the axis of rotation R;
- at least one shift member 48 sliding with respect to the holding member 47 along the thrust direction P, the thrust assembly 45 being associated with the shift member 48;
- at least one first actuation unit 49 associated with the supporting frame 13 and with the holding member 47 for the rotation of the holding member 47; and
- at least one second actuation unit 50 associated with the holding member 47 and the shift member 48 for the sliding of the shift member 48.

The holding member 47 is substantially plate-shaped and is hinged at the lower end of the post member 14.

The first actuation unit 49 is associated with the holding member 47 and allows the rotation thereof, positioning it alternately in a first substantially vertical position and in a second substantially horizontal position.

The shift member 48 comprises a plate 48a to which two bars 48b with substantially horizontal extension are attached and which lie on a plane substantially parallel to the lying plane of the holding member 47.

The bars 48b can slide inside two sleeves 47a attached to one end of the holding member 47 along the thrust direction P.

The thrust assembly 45 is secured to the plate 48a and, therefore, also slides along the thrust direction P with respect to the holding member 47.

The second actuation unit 50 comprises a hydraulic cylinder which is attached to the holding member 47 and to the plate 48a and allows the plate 48a to slide along the thrust direction P and the bars 48b to slide inside the sleeves 47a.

When the thrust assembly 45 is located in the resting configuration, the holding member 47 is located in the first position and the bars 48b do not protrude from the holding member 47.

To position the thrust assembly 45 in the thrust configuration, the plate 48a is made to slide so that the bars 48b cantilever out of the holding member 47, thanks to the intervention of the second actuation unit 50, and the holding member 47 is made to rotate thanks to the intervention of the first actuation unit 49.

Then, the second actuation unit 50 makes the plate 48a slide again towards the holding member 47; this way the thrust assembly 45 exerts a pressure on the tyre 2 along the thrust direction P, at the point where the second flank 10 is located.

The thrust assembly 45 comprises at least one roller 51 associated at one end with the shift member 48 and rotatable with respect to the shift member 48 around a rolling axis T substantially incident and perpendicular to the axis of rotation R when the thrust assembly 45 is in the thrust configuration.

The thrust assembly 45 comprises a small arm 52 attached at one end to the plate 48a and on the opposite end of which the roller 51 is mounted in a rotatable manner.

The rolling axis of the roller 51 coincides with the longitudinal axis of the small arm 52.

The rolling axis T takes different orientations in space depending on the positioning of the thrust assembly 45.

When the thrust assembly 45 is positioned in the thrust configuration it is incident and perpendicular to the axis of rotation R and faces the geometric centre of the wheel 4.

As will be better described below, this special positioning is particularly advantageous when using the tyre-changing machine 1.

Advantageously, the tyre-changing machine 1 comprises sensor means 53 operationally connected to the management and control unit 41 and adapted to detect the position of the thrust assembly 45 with respect to the supporting frame 13.

In particular, the sensor means 53 comprises a fourth linear transducer 53 which is mounted on the holding member 47 along the thrust direction P and detects the distance of the thrust assembly 45 from the holding member 47.

The management and control unit 41 controls the operation of the movement assembly 46 depending on the position of the thrust assembly 45 and, specifically, adjusts the first actuation unit 49 and the second actuation unit 50, controlling the thrust that the thrust assembly 45 exerts on the second flank 10.

The tyre-changing machine 1 comprises at least one user interface 54 connected to the management and control unit 41 for the control of the tyre-changing machine 1 by an operator.

The user interface 54 conveniently comprises means for entering the diameter of the rim 3 by the operator.

In particular, after the diameter of the rim 3 has been entered, the management and control unit 41 automatically controls the operation of the tyre-changing machine 1 thanks to its special configuration and to the data provided by the position detection means 42, 43, 44 and by the sensor means 53.

The operation of the tyre-changing machine according to the invention is as follows.

The operator, through the user interface 54, enters the diameter of the rim 3 which is sent to the management and control unit 41.

The management and control unit 41 controls the movement means 23, in particular the actuator device 26, which determine the sliding of the gripping and setting in rotation means 16 along the direction of lifting/lowering L by positioning them at a height related to the diameter of the rim 3 entered.

Then, the operator makes the wheel 4 roll on the ground and keeps it in a vertical position, i.e. with the tread 8 contacting the ground, and positions the wheel 4 in the proximity of the gripping and setting in rotation means 16.

Afterwards, the gripping and setting in rotation means 16 contact the rim 3 and, precisely, the jaws 18 grasp the rim 3 itself.

The movement means 23 lift the gripping and setting in rotation means 16, thus also lifting the wheel 4 previously hooked by the gripping unit 17, until it reaches a first height.

The management and control unit 41 controls the sliding means 34 by determining the sliding of the first bead-breaking assembly 27 and of the second bead-breaking assembly 28 towards the tyre 2.

The first bead-breaking device 31 and the second bead-breaking device 32 contact the first flange member 5 and the second flange member 6, respectively. The tyre-changing machine 1 conveniently comprises pressure sensors that detect the contact between the bead-breaking devices 31 and 32 and the flange members 5, 6, thus achieving controlled contact between the bead-breaking device 31 and 32 and the flange members 5, 6.

The first linear transducer 42 and the second linear transducer 43 communicate the position of the first bead-breaking assembly 27 and of the second bead-breaking assembly 28 to the management and control unit 41, which is able to derive the width of the rim 3, i.e. the distance between the flange members 5, 6. The width of the rim 3, together with the rim diameter, is a datum used by the management and control unit 41 to position the moving parts of the tyre-changing machine 1 at the optimal distances from the rim 3 and from the tyre 2 to carry out automatic operation.

The movement means 23 then lower the gripping and setting in rotation means 16 to a second height, so that the first bead-breaking device 31 and the second bead-breaking device 32 abut on the first bead 11 and on the second bead 12, respectively.

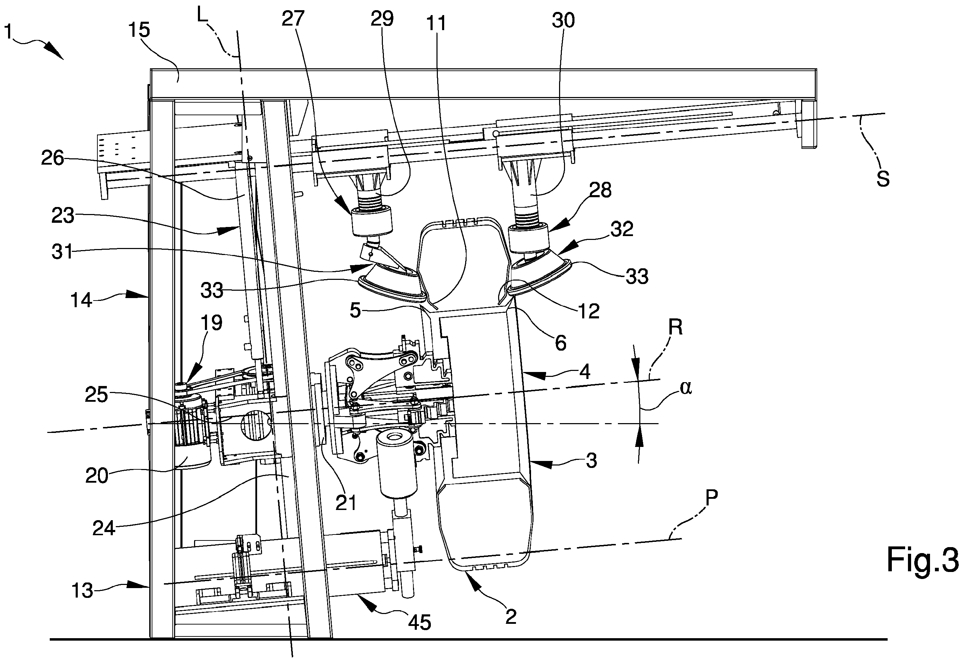

The sliding means 34 continue to make the first bead-breaking assembly 27 and the second bead-breaking assembly 28 slide towards each other, so that the first bead 11 and the second bead 12 move away from the first flange member 5 and from the second flange member 6 (Figure 3).

The setting in rotation of the wheel 4 by the gripping and setting in rotation means 16 allows moving the beads 11, 12 away from the flange members 5, 6 along the entire circumferential perimeter of the rim 3, so that the wheel 4 is removed.

Preferably, the bead-breaking operation is carried out first on one bead and then on the other bead, although it is possible to perform the simultaneous bead-breaking of both beads 11, 12.

The presence of the protruding portion 33 on both bead-breaking devices 31, 32 promotes the fitting of these between the beads 11, 12 and the flange members 5, 6.

The operator can possibly spread a lubricant between the beads 11, 12 and the flange members 5, 6 thus promoting the removal of the tyre 2.

The second bead-breaking assembly 28 is moved away from the tyre 2 and positioned in the proximity thereof so as to hold the tyre 2 when positioned in the delivery configuration.

The thrust assembly 45 is positioned in the thrust configuration and the roller 51 abuts on the second flank 10.

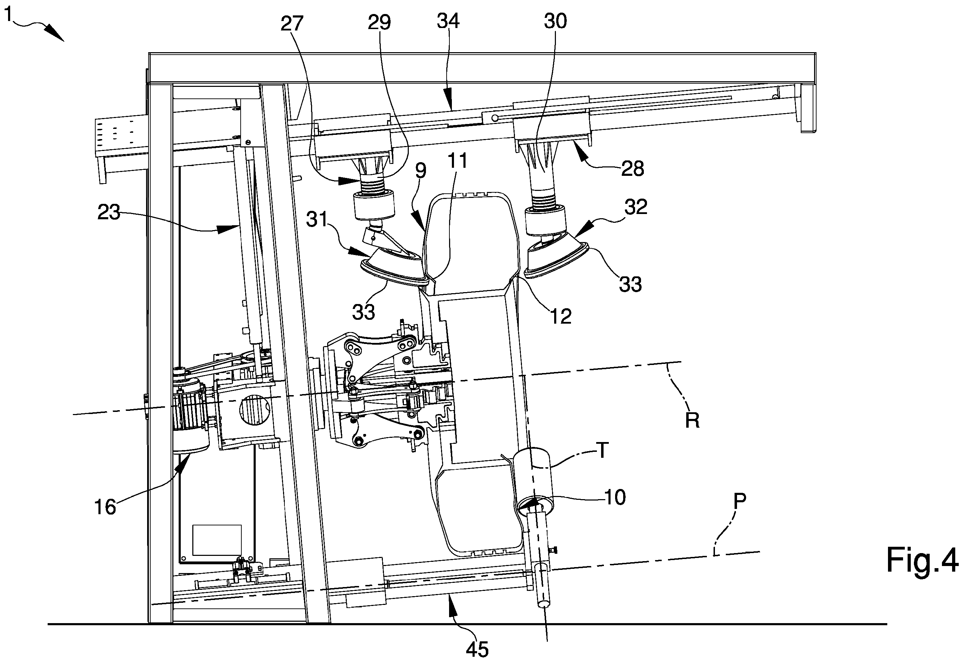

At the same time, the sliding means 34 move the first bead-breaking assembly 27 towards the first flank 9 and the movement assembly 46 makes the thrust assembly 45 slide along the thrust direction P towards the second flank 10 (Figure 4).

This way the first bead-breaking assembly 27 and the thrust assembly 45 exert two thrusts in substantially parallel but opposite directions on the tyre 2, so as to promote the removal of the second bead 12 and its coming out of the channel 7 of the rim 3.

At the same time, the gripping and setting in rotation means 16 set the rim 3 in rotation around the axis of rotation R, thus promoting the removal of the second bead 12 around the entire circumferential perimeter of the rim 3.

When setting the wheel 4 in rotation, the roller 51 rolls around the rolling axis T without substantially grazing on the second flank 10, except for an extremely small extent, so as not to damage the tyre 2.

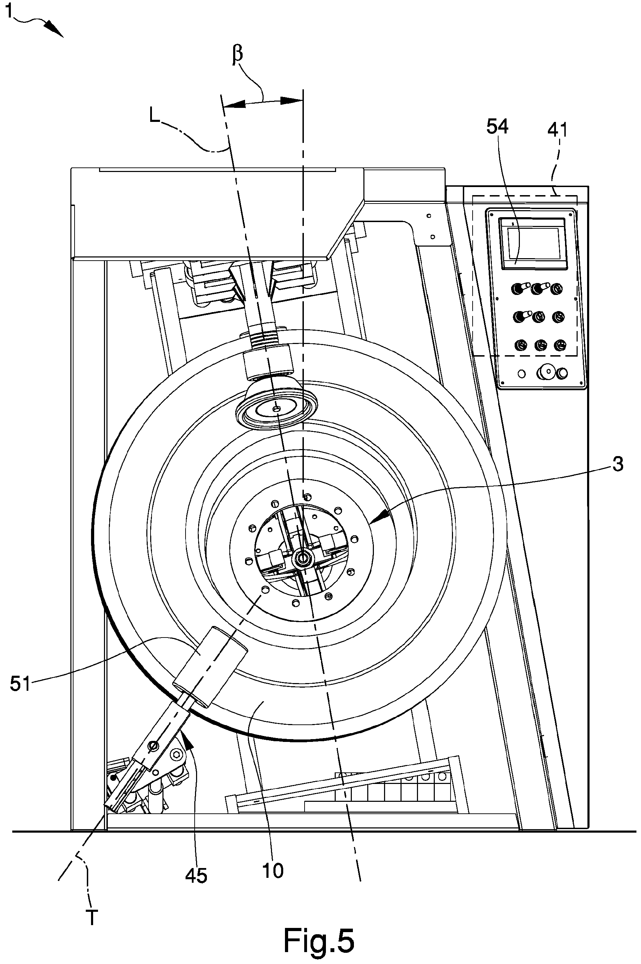

The special positioning of the rolling axis T when the thrust assembly 45 is in the thrust configuration, i.e. substantially incident and orthogonal to the axis of rotation R, allows increasing the contact surface between the roller 51 and the second flank 10, to promote the rolling of the roller 51 on the tyre 2 and to keep the tyre 2 inside the channel 7, in order to promote the removal of the tyre 2 itself (Figure 5).

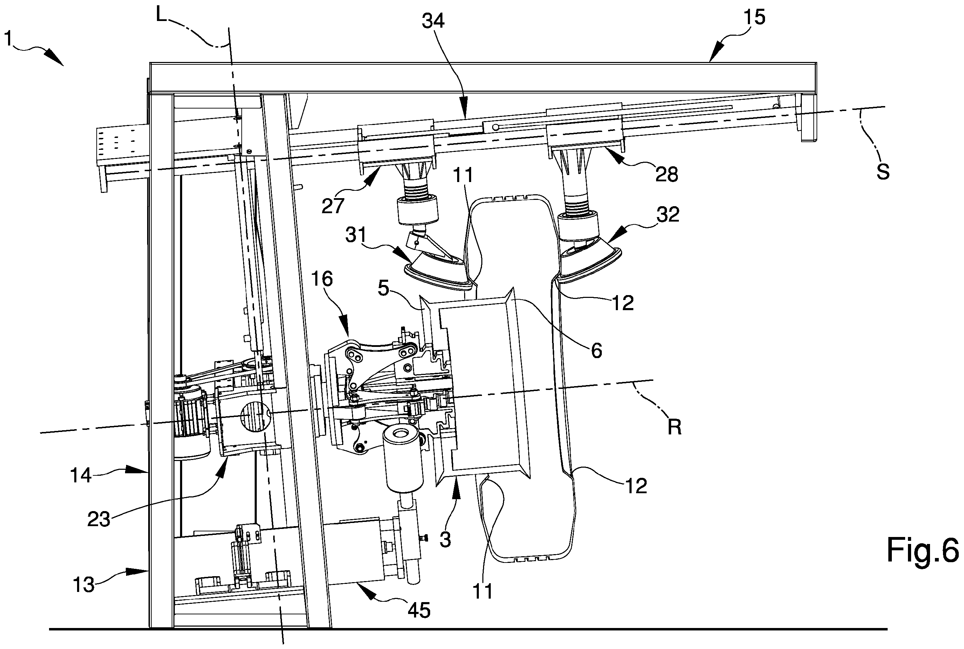

The second bead-breaking assembly 28 is located in the proximity of the tyre 2 so that it comes in contact with the second flank 10 and holds the tyre 2 as soon as the second bead 12 has been removed, i.e. when it completely rides over the second flange member 6 and the tyre 2 switches to the delivery configuration (Figure 6).

Once the delivery configuration has been reached with the first bead 11 still inside the channel 7, the thrust assembly 45 is moved back to the resting configuration.

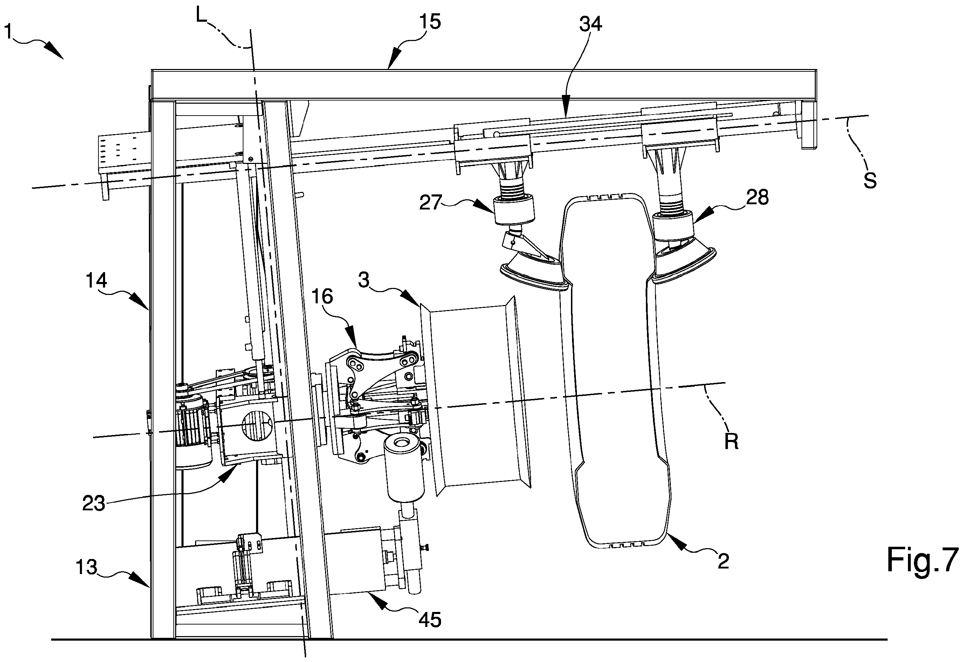

At this point, both the bead-breaking assemblies 27, 28 are moved synchronously so as to move away from the post member 14 and drag the first bead 11 beyond the second flange member 6, so as to move the tyre 2 away from the rim 3 (Figure 7) and then release it in a controlled manner in a position which is not close to the rim 3.

The release of the tyre 2 takes place in a very safe condition because, when released, the tyre 2 falls standing in an obstacle-free area and when the operator is ready to receive it, i.e. not suddenly.

In this respect, the tyre-changing machine 1 can provide that the release of the tyre 2 occurs only after the enabling command by the operator via the user interface 54.

It has in practice been observed that the present invention achieves the intended objects.

In fact, the special solution of providing two bead-breaking assemblies like those of the invention, allows improving the way the tyre is detached, thus performing this operation easily and safely.

The tyre-changing machine according to the invention can also operate almost completely automatically; the operator is in fact required to enter only the rim diameter (and, if necessary, the enabling command to release the removed tyre) while all other commands are given by the management and control unit.

## Claims

1. Tyre-changing machine (1), particularly for large wheels, **characterized by** the fact that it comprises:
- at least one supporting frame (13) resting on the ground comprising at least one post member (14) and at least one cross member (15) associated with the upper end of said post member (14);
- gripping and setting in rotation means (16) associated with said supporting frame (13), adapted to grip at least one wheel (4), provided with at least one rim (3) and with at least one tyre (2), and to move said rim (3) in rotation around a substantially horizontal axis of rotation (R), said rim (3) comprising at least one first flange member (5) and at least one second flange member (6) and said tyre (2) comprising at least one first flank (9) provided with at least one first bead (11) able to be juxtaposed to said first flange member (5) and at least one second flank (10) provided with at least one second bead (12) able to be juxtaposed to said second flange member (6);
- movement means (23) of said gripping and setting in rotation means (16) along a substantially vertical direction of lifting/lowering (L), said movement means (23) being associated with said supporting frame (13);
- at least one first bead-breaking assembly (27) and at least one second bead-breaking assembly (28) associated below said cross member (15) and adapted to remove said first bead (11) and said second bead (12) when both said beads (11, 12) are mounted on said rim (3) and to simultaneously grip said tyre (2) in a delivery configuration, wherein said tyre (2) is kept suspended under said cross member (15), when at least said second bead (12) is removed from said rim (3);
- sliding means (34) associated with said supporting frame (13) and adapted to make said first bead-breaking assembly (27) and said second bead-breaking assembly (28) slide with respect to said cross member (15) along a sliding direction (S) substantially parallel to said axis of rotation (R).

2. Tyre-changing machine (1) according to claim 1, **characterized by** the fact that it comprises at least one management and control unit (41) operationally connected to said sliding means (34) and configured to make said first bead-breaking assembly (27) and said second bead-breaking assembly (28) slide simultaneously in said delivery configuration to move said tyre (2) away from said rim (3).

3. Tyre-changing machine (1) according to one or more of the preceding claims, **characterized by** the fact that it comprises position detection means (42, 43, 44) associated with said supporting frame (13), connected to said management and control unit (41) and adapted to detect the position of said gripping and setting in rotation means (16), of said first bead-breaking assembly (27) and of said second bead-breaking assembly (28) with respect to said supporting frame (13).

4. Tyre-changing machine (1) according to one or more of the preceding claims, **characterized by** the fact that it comprises:
- at least one thrust assembly (45) associated with the lower end of said post member (14);
- at least one movement assembly (46) associated with said supporting frame (13) and adapted to move said thrust assembly (45) between at least:
- a resting configuration in which it is moved away from said tyre (2); and
- a thrust configuration in which it is abutted at least partially on said second flank (10) and is adapted to exert a thrust on said tyre (2) along a thrust direction (P) substantially parallel to said sliding direction (S), at the same time as a thrust exerted by said first bead-breaking assembly (27) on said first flank (9).

5. Tyre-changing machine (1) according to one or more of the preceding claims, **characterized by** the fact that said movement assembly (46) comprises:
- at least one holding member (47) hinged to said supporting frame (13) around an axis substantially parallel to said axis of rotation (R);
- at least one shift member (48) sliding with respect to said holding member (47) along said thrust direction (P), said thrust assembly (45) being associated with said shift member (48);
- at least one first actuation unit (49) associated with said supporting frame (13) and with said holding member (47) for the rotation of said holding member (47); and
- at least one second actuation unit (50) associated with said holding member (47) and with said shift member (48) for the sliding of said shift member (48).

6. Tyre-changing machine (1) according to one or more of the preceding claims, **characterized by** the fact that said thrust assembly (45) comprises at least one roller (51) associated by one end with said shift member (48) and rotatable with respect to said shift member (48) around a rolling axis (T) substantially incident and perpendicular to said axis of rotation (R) when said thrust assembly (45) is in said thrust configuration.

7. Tyre-changing machine (1) according to one or more of the preceding claims, **characterized by** the fact that it comprises sensor means (53) operationally connected to said management and control unit (41) and adapted to detect the position of said thrust assembly (45) with respect to said supporting frame (13).

8. Tyre-changing machine (1) according to one or more of the preceding claims, **characterized by** the fact that it comprises at least one user interface (54) connected to said management and control unit (41) for the control of said tyre-changing machine (1) by an operator.

9. Tyre-changing machine (1) according to one or more of the preceding claims, **characterized by** the fact that said user interface (54) comprises means for the insertion of the diameter of said rim (3) by said operator.

10. Tyre-changing machine (1) according to one or more of the preceding claims, **characterized by** the fact that said gripping and setting in rotation means (16) comprise:
- at least one gripping unit (17) comprising a plurality of jaws (18) adapted to grip said rim (3);
- at least one driving unit (19) for the setting in rotation of said gripping unit (17) around said axis of rotation (R), comprising:
- at least one electric motor (20);
- at least one transmission shaft (21) which extends along said axis of rotation (R), associated with said electric motor (20) and on which said gripping unit (17) is mounted.

11. Tyre-changing machine (1) according to one or more of the preceding claims, **characterized by** the fact that said movement means (23) comprise:
- at least one sliding rail (24) associated with said post member (14) and having a substantially vertical extension, said gripping and setting in rotation means (16) comprising at least one sliding member (25) with respect to said sliding rail (24) along said direction of lifting/lowering (L), said driving unit (19) being mounted on said sliding member (25);
- at least one actuator device (26) associated with said supporting frame (13) and with the sliding member (25) for the movement of said sliding member (25) on said sliding rail (24).

12. Tyre-changing machine (1) according to one or more of the preceding claims, **characterized by** the fact that said sliding means (34) comprise:
- at least one first rail unit (35), which is associated with said cross member (15) and extends along said sliding direction (S), said first bead-breaking assembly (27) comprising at least one first slide (36) sliding along said first rail unit (35);
- at least one first actuator member (37) associated with said supporting frame (13) and with said first slide (36) to move said first slide (36) with respect to said first rail unit (35);
- at least one second rail unit (38), which is associated with said cross member (15) and extends along said sliding direction (S), said second bead-breaking assembly (28) comprising at least one second slide (39) sliding along said second rail unit (38);
- at least one second actuator member (40) associated with said supporting frame (13) and with said second slide (39) to move said second slide (39) with respect to said second rail unit (38).
